# EUROPÄISCHE PATENTANMELDUNG

(11) **EP 3 340 580 A1**
(43) Veröffentlichungstag der Anmeldung: **27.06.2018**
(21) Anmeldenummer: 16206604.7
(22) Anmeldetag: 23.12.2016
(51) Int. Cl.: H04L 29/12, G05B 19/418, H04L 29/08

(54) **VERFAHREN ZUR BEREITSTELLUNG EINES ERWEITERTEN NAMENSDIENSTES FÜR EIN INDUSTRIELLES AUTOMATISIERUNGSSYSTEM**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Müller, Felix, Gilbert 85233 (US); Talanis, Thomas, 91336 Heroldsbach (DE)

(57) **Zusammenfassung**

Zur Bereitstellung eines erweiterten Namensdienstes für ein industrielles Automatisierungssystem werden in einem Namensdienstsystem Name-Adress-Zuordnungen zwischen Gerätenamen und Kommunikationsnetzadressen erfasst, wobei im Namensdienstsystem erfasste Gerätenamen eine durch eine Baumstruktur repräsentierte hierarchische Gliederung aufweisen. Im Namensdienstsystem werden zusätzlich Zuordnungen zwischen Gerätenamen und Anlagenkennzeichen erfasst, wobei die Anlagenkennzeichen jeweils mit einem Verweis auf einen zugeordneten Gerätenamen in einem separaten Teilbaum innerhalb derselben Baumstruktur wie die Gerätenamen erfasst werden. Durch eine Indizierungseinheit wird für den die Anlagenkennzeichen umfassenden Teilbaum ein Suchindex für eine Suche nach Anlagenkennzeichen bzw. Bestandteilen von Anlagenkennzeichen erzeugt, wobei der Suchindex in die Anlagenkennzeichen codierte Informationen umfasst.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus EP 2940926 A1 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

In EP 2940972 B1 ist eine Bereitstellung eines Namensdienstes innerhalb eines industriellen Kommunikationssystems beschrieben, bei dem Router-Bekanntgaben mit Namensinformationen aus überlagerten Teilnetzen durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet werden. Kommunikationsendgeräte erzeugen aus topologischen bzw. hierarchischen Namensbestandteilen und einem innerhalb ihres jeweiligen Teilnetzes eindeutigen Namensbestandteil selbständig ihren Gerätenamen.

EP 2975477 A1 betrifft ein Verfahren zur Registrierung von Gerätenamen aus einem industriellen Automatisierungssystem bei einem Kommunikationsnetz-Namensdienst. Mittels einer Regelbasis geräteindividuell wird festgelegt, für welche Kommunikationsgeräte des industriellen Automatisierungssystems eine Registrierung ihres jeweiligen Gerätenamens beim Kommunikationsnetz-Namensdienst zulässig bzw. erforderlich ist. Mittels geräteseitiger dezentraler Namensdienst-Agenten werden Kommunikationsnetzadressen von Kommunikationsgeräten an einen zentralen Namensdienst-Agenten des industriellen Automatisierungssystems gemeldet. Bei einer zu registrierenden Name-Adress-Zuordnung übermittelt der zentrale Namensdienst-Agent eine die Name-Adress-Zuordnung umfassende Registrierungsanforderung an den Kommunikationsnetz-Namensdienst. Innerhalb des industriellen Automatisierungssystems kann nur der zentrale Namensdienst-Agent Registrierungsanforderungen zur Verarbeitung an den Kommunikationsnetz-Namensdienst übermitteln.

Aus EP 3059930 A1 ist bekannt, dass zur Konfiguration eines Kommunikationsgeräts eines industriellen Automatisierungssystems aus zumindest einem mittels Routerbekanntgabe-Nachrichten durch zumindest einen innerhalb eines Teilnetzes zugeordneten Router übermittelten Präfix und aus einem geräteindividuellen Schnittstellenidentifikator selbständig eine dem Kommunikationsgerät zugeordnete Kommunikationsnetzadresse erzeugt wird. Das Kommunikationsgerät fragt bei zumindest einem Server eines Namensdienst-Systems entsprechend einem Namensauflösungsprotokoll ab, welche Kommunikationsnetzadressen seinem Kommunikationsgerätnamen zugeordnet sind. Die beim Server des Namensdienst-Systems abgefragten Kommunikationsnetzadressen werden auf eine Übereinstimmung mit dem Präfix überprüft. Das Kommunikationsgerät ordnet sich nur die beim Server des Namensdienst-Systems abgefragten Kommunikationsnetzadressen zu, die eine Übereinstimmung mit dem durch den Router übermittelten Präfix aufweisen.

In industriellen Automatisierungssystemen bestehen aufgrund technischer Rahmenbedingungen mehrere Namenssysteme für Automatisierungsgeräte, so dass ein einzelnes Automatisierungsgerät mehrere zugeordnete Namen haben kann. Zum einen werden Automatisierungsgeräte über ihren jeweiligen Hostnamen adressiert, der als Fully Qualified Domain Name (FQDN) mittels eines Domain Name System (DNS) in eine Kommunikationsnetzadresse aufgelöst wird, die üblicherweise IPv4- oder IPv6-basiert ist. Im Rahmen von Planung und Instandhaltung einer technischen Anlage werden für Anlagenkomponenten darüber hinaus Anlagenkennzeichen verwendet, beispielsweise entsprechend DIN 40719-2 oder EN 81346. Diese Anlagenkennzeichen befinden sich sehr häufig auf Beschriftungen an Anlagenkomponenten bzw. Automatisierungsgeräten. Automatisierungs- bzw. Kommunikationsgeräten kann also insbesondere jeweils ein Fully Qualified Domain Name und ein Anlagenkennzeichen zugeordnet sein.

Eine Verwendung langer topologische oder funktionale Informationen umfassende Anlagenkennzeichen ist nicht nur unkomfortabel, sondern auch fehleranfällig. Bisher übliche Autovervollständigen-Funktionen können allenfalls eingeschränkt verwendet werden, da eine Abfrage registrierter Anlagenkennzeichen einerseits eine hohe Netz- und Gerätelast verursacht und andererseits nicht über Teilnetzgrenzen hinweg möglich ist.

Der vorliegenden Erfindung liegt die Aufgabe zugrunde, ein einfach realisierbares Verfahren zur Bereitstellung eines Namensdienstes innerhalb eines industriellen Automatisierungssystems zu schaffen, das ein benutzerfreundliches und zuverlässiges Ansprechen von Automatisierungs- bzw. Kommunikationsgeräten auch über Anlagenkennzeichen ermöglicht.

Diese Aufgabe wird erfindungsgemäß durch ein Verfahren mit den in Anspruch 1 genannten Merkmalen gelöst. Vorteilhafte Weiterbildungen der vorliegenden Erfindung sind in den abhängigen Patentansprüchen angegeben.

Entsprechend dem erfindungsgemäßen Verfahren zur Bereitstellung eines erweiterten Namensdienstes für ein industrielles Automatisierungssystem werden in einem zumindest einen Namensdienst-Server umfassenden Namensdienstsystem Name-Adress-Zuordnungen zwischen Gerätenamen und Kommunikationsnetzadressen für Automatisierungs- bzw. Kommunikationsgeräte erfasst, anhand derer auf eine Namensauflösungsanfrage eine zugeordnete Kommunikationsnetzadresse bereitgestellt wird. Im Namensdienstsystem erfasste Gerätenamen weisen eine durch eine Baumstruktur repräsentierte hierarchische Gliederung auf. Zusätzlich zu den Name-Adress-Zuordnungen werden im Namensdienstsystem Zuordnungen zwischen Gerätenamen und Anlagenkennzeichen für Automatisierungs- bzw. Kommunikationsgeräte erfasst. Die Anlagenkennzeichen umfassen dabei codierte Gerätetypen, Gerätestandorte bzw. hierarchische Gerätezuordnungen innerhalb des industriellen Automatisierungssystems und werden jeweils mit einem Verweis auf einen zugeordneten Gerätenamen in einem separaten Teilbaum innerhalb derselben Baumstruktur wie die Gerätenamen erfasst.

Erfindungsgemäß wird eine Erfassung einer Name-Adress-Zuordnung und einer Zuordnung zwischen Gerätename und Anlagenkennzeichen durch das jeweilige Automatisierungs- bzw. Kommunikationsgerät veranlasst. Durch eine Indizierungseinheit, die beispielsweise Webcrawler-Funktionen umfasst, wird für den die Anlagenkennzeichen umfassenden Teilbaum ein Suchindex für eine Suche nach Anlagenkennzeichen bzw. Bestandteilen von Anlagenkennzeichen erzeugt. Dabei umfasst der Suchindex in die Anlagenkennzeichen codierte Informationen. An einen Web-Server des industriellen Automatisierungssystems gerichtete Gerätesuchanfragen, die Bestandteile von Anlagenkennzeichen umfassen, werden an ein den Suchindex nutzendes Suchmodul zur Ermittlung zumindest eines vollständigen Anlagenkennzeichens weitergeleitet. Auf Basis eines ermittelten vollständigen Anlagenkennzeichens wird eine Anfrage zur Auflösung eines Anlagenkennzeichens an das Namensdienstsystem übermittelt. Somit können zur fehlerarmen, komfortablen Eingabe von Anlagenkenzeichen Teilnetz- bzw. Zell-übergreifend Autovervollständigen-Funktionen genutzt werden, insbesondere um anhand der Anlagenkennzeichen auf Automatisierungs- bzw. Kommunikationsgeräte zugreifen zu können.

Die Erfassung der Name-Adress-Zuordnung und der Zuordnung zwischen Gerätename und Anlagenkennzeichen kann beispielsweise mittels eines DNS-Update-Requests bzw. eines DNS-Update-Client entsprechend IETF RFC 2136 durch das jeweilige Automatisierungs- und/oder Kommunikationsgerät veranlasst werden. Entsprechend einer weiteren vorteilhaften Ausgestaltung der vorliegenden Erfindung wird vor der Erfassung der Name-Adress-Zuordnung und der Zuordnung zwischen Gerätename und Anlagenkennzeichen eine Authentifizierung des jeweiligen Automatisierungs- bzw. Kommunikationsgeräts entsprechend IETF RFC 3007 durchgeführt.

Vorzugsweise wird eine Kopie des die Anlagenkennzeichen umfassenden Teilbaums mittels eines vollständigen asynchronen Zonentransfers entsprechend IETF RFC 5936, eines inkrementellen Zonentransfers entsprechend IETF RFC 1995, Benachrichtigungen über DNS-Zonenänderungen entsprechend IETF RFC 1996 bzw. mittels DNS-Push-Benachrichtigungen entsprechend IETF draft-ietf-dnssd-push vom Namensdienst-Server an die Indizierungseinheit übertragen. Entsprechend einer bevorzugten Ausgestaltung des erfindungsgemäßen Verfahrens werden Codes für Gerätetypen, Gerätestandorte bzw. hierarchische Gerätezuordnungen innerhalb des industriellen Automatisierungssystems durch das Suchmodul an die Indizierungseinheit bereitgestellt und durch die Indizierungseinheit im Suchindex abgebildet. Somit ist auch eine semantische Suche über Anlagenkennzeichen möglich. Hierzu umfasst der Suchindex vorzugsweise die in die Anlagenkennzeichen codierten Gerätetypen, Gerätestandorte bzw. hierarchische Gerätezuordnungen innerhalb des industriellen Automatisierungssystems. Das Suchmodul kann beispielsweise benutzer- bzw. anwendungsspezifische Code-Definitionen umfassen, so dass Anpassungen der Codes durch ein Austauschen eines Suchmoduls auf einfache Weise vorgenommen werden können.

Darüber hinaus nimmt das Suchmodul vorteilhafterweise Bestandteile von Anlagenkennzeichen als Gerätesuchanfragen entgegen, führt anhand des Suchindex eine Suche nach möglichen vollständigen Anlagenkennzeichen durch, stellt eine Benutzerauswahl ermittelter möglicher Anlagenkennzeichen bereit und komplettiert auf Basis einer Benutzerauswahl das Anlagenkennzeichen. Des weiteren wird entsprechend einer weiteren vorteilhaften Ausgestaltung der vorliegenden Erfindung bei einer Anfrage zur Auflösung eines Anlagenkennzeichens anhand der Zuordnungen zwischen Gerätenamen und Anlagenkennzeichen ein Gerätename ermittelt und für diesen eine Namensauflösungsanfrage zur Ermittlung einer zugeordneten Kommunikationsnetzadresse durchgeführt. Damit können Anlagenbetreiber oder - instandhalter Anlagenkennzeichen direkt von Automatisierungs- bzw. Kommunikationsgeräten ablesen und anhand des jeweiligen Anlagenkennzeichens mittels eines üblichen Web-Browsers direkt auf ein Automatisierungs- bzw. Kommunikationsgerät zugreifen. Dies ermöglicht eine effizientere Durchführung von Wartungs- oder Instandhaltungsprozessen in einem industriellen Automatisierungssystem. Darüber hinaus können Zuordnungen zwischen Geräte- bzw. Hostnamen bei laufendem Betrieb eines industriellen Automatisierungssystems erfasst bzw. aktualisiert werden, ohne dass hierzu in einem üblichen Web-Browser Browsererweiterungen oder Eingriffe in bestehende Software-Architekturen notwendig sind.

Die Baumstruktur, innerhalb deren hierarchischer Gliederung Gerätenamen erfasste werden, umfasst insbesondere einen Wurzelknoten, innere Knoten und Endknoten. Den Anlagekennzeichen werden in der Baumstruktur vorzugsweise jeweils Endknoten zugeordnet. Dabei umfassen die den Anlagekennzeichen jeweils zugeordneten Endknoten einen Verweis auf den Gerätenamen jeweils zugeordnete Endknoten oder Zwischenknoten für Anlagekennzeichen einen Verweis auf Anlageneinheiten jeweils zugeordnete Zwischenknoten.

Entsprechend einer bevorzugten Ausgestaltung der vorliegenden Erfindung werden die Gerätenamen und die Anlagenkennzeichen von Automatisierungs- bzw. Kommunikationsgeräten einer Automatisierungsanlage innerhalb separater anlagenindividueller Teilbäume der Baumstruktur verwaltet. Dabei umfasst der Wurzelknoten des Teilbaums für die Gerätenamen einen Verweis auf den zugeordneten Wurzelknoten des Teilbaums für die Anlagenkennzeichen. Der Verweis auf den zugeordneten Wurzelknoten des Teilbaums für die Anlagenkennzeichen kann beispielsweise durch einen Text Resource Record im Wurzelknoten des Teilbaums für die Gerätenamen erfolgen. Vorzugsweise bildet der Wurzelknoten des Teilbaums für die Gerätenamen einen Zonenkopf des Teilbaums für die Gerätenamen, während der Wurzelknoten des Teilbaums für die Anlagenkennzeichen einen Zonenkopf des Teilbaums für die Anlagenkennzeichen bildet. Dabei sind die Zonenköpfe jeweils durch einen Start of Authority Resource Record gekennzeichnet.

Bei einer Erfassung eines Anlagenkennzeichens wird entsprechend einer vorteilhaften Ausgestaltung der vorliegenden Erfindung der zugeordnete Gerätename ermittelt. Anhand des ermittelten Gerätenamens wird dann der Wurzelknoten des Teilbaums für die Gerätenamen ermittelt. Der zugeordnete Wurzelknoten des Teilbaums für die Anlagenkennzeichen wird wiederum anhand des ermittelten Wurzelknotens des Teilbaums für die Gerätenamen ermittelt. Für das zu erfassende Anlagenkennzeichen wird dann ein Endknoten unterhalb des ermittelten Wurzelknotens des Teilbaums für die Anlagenkennzeichen erzeugt.

Entsprechend einer weiteren vorteilhaften Ausgestaltung des erfindungsgemäßen Verfahrens werden die Anlagenkennzeichen auf Basis einer vorgegebenen Codierungsregel entsprechend Automation Domain Name Algorithmus oder entsprechend IETF RFC 3405 in Verbindung mit IETF RFC 2483 codiert und entsprechend der vorgegebenen Codierungsregel codiert durch den Namensdienst-Server gespeichert. Somit können für die Anlagenkennzeichen über in Domain Name Systemen verwendbare Zeichen hinaus Sonderzeichen oder regionale Buchstabensätze verwendet werden. Beispielsweise kann für eine Anlagenkennzeichenbasierte Adressierung eines Automatisierungs- bzw. Kommunikationsgeräts eine Benutzereingabe eines Anlagenkennzeichens angefordert werden. In diesem Fall wird ein durch einen Benutzer eingegebenes Anlagenkennzeichen entsprechend der vorgegebenen Codierungsregel codiert und entsprechend der vorgegebenen Codierungsregel codiert für eine Anlagenkennzeichen-Auflösung an den Namensdienst-Server übermittelt. Der Namensdienst-Server führt dann für ein entsprechend der vorgegebenen Codierungsregel codiertes Anlagenkennzeichen eine Auflösung des Anlagenkennzeichens in eine zugeordnete Kommunikationsnetzadresse durch.

Die vorliegende Erfindung wird nachfolgend an einem Ausführungsbeispiel anhand der Zeichnung näher erläutert. Es zeigt
- Figur 1: eine schematische Darstellung einer Anlagenkennzeichen-Auflösung in einem industriellen Automatisierungssystem mit einem Automatisierungsgerät und einem DNS-Server,
- Figur 2: eine Detaildarstellung des Automatisierungsgeräts mit einem FQDN-Gerätenamen sowie einem Anlagenkennzeichen und des DNS-Servers zur Verwaltung jeweils eines Teilbaums für FQDN-Gerätenamen und Anlagenkennzeichen,
- Figur 3: eine Darstellung einer Verknüpfung von Endknoten des Teilbaums für Anlagenkennzeichen mit Endknoten des Teilbaums für FQDN-Gerätenamen,
- Figur 4: eine Darstellung einer Verknüpfung eines Wurzelknotens des Teilbaums für FQDN-Gerätenamen mit einem Wurzelknoten des Teilbaums für Anlagenkennzeichen.

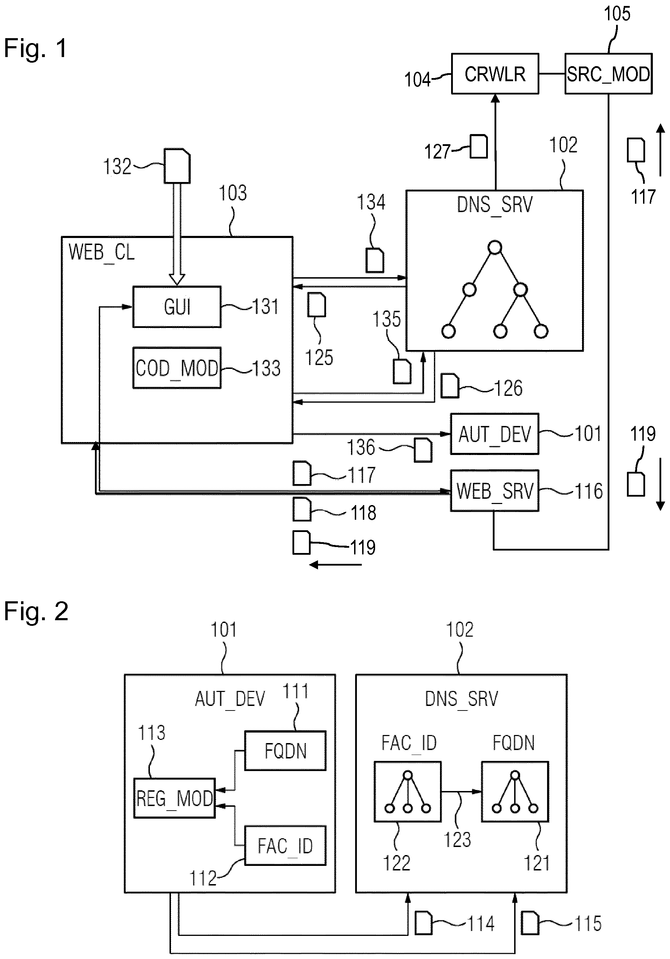

Entsprechend Figur 1 ist zur Bereitstellung eines erweiterten Namensdienstes für ein industrielles Automatisierungssystem ein DNS-Server 102 eines Namensdienstsystems vorgesehen, in dem Name-Adress-Zuordnungen zwischen FQDN-Gerätenamen und Kommunikationsnetzadressen für Automatisierungs- bzw. Kommunikationsgeräte erfasst werden. Anhand dieser Name-Adress-Zuordnungen stellt der DNS-Server 102 als Namensdienst-Server auf eine Namensauflösungsanfrage eine zugeordnete Kommunikationsnetzadresse bereit. Im DNS-Server 102 erfasste FQDN-Gerätenamen weisen eine durch eine Baumstruktur repräsentierte hierarchische Gliederung auf, wobei die Baumstruktur einen Wurzelknoten, innere Knoten und Endknoten umfasst. Die Kommunikationsnetzadressen werden durch den DNS-Server 102 als IP-Adressen in Form eines oder mehrerer A/AAAA Resource Records erfasst bzw. aktualisiert.

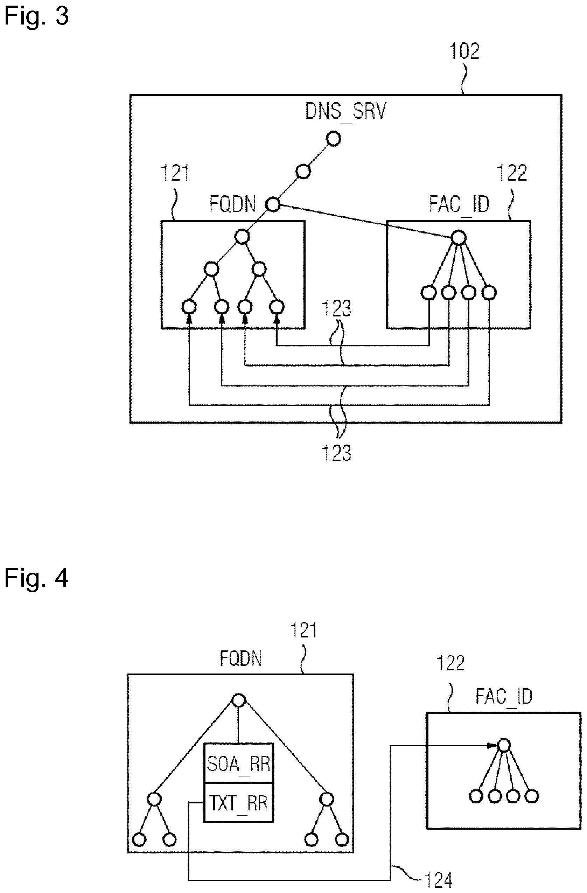

Das in Figur 1 dargestellte industrielle Automatisierungssystem umfasst zumindest ein Automatisierungsgerät 101, das im vorliegenden Ausführungsbeispiel als speicherprogrammierbare Steuerung ausgestaltet ist und dem sowohl ein FQDN-Gerätename 111 als auch ein Anlagenkennzeichen 112 zugeordnet ist (siehe auch Figur 2). Dementsprechend verwaltet der DNS-Server 102 sowohl einen Teilbaum 121 für FQDN-Gerätenamen als auch einen Teilbaum 122 für Anlagenkennzeichen. Somit werden im DNS-Server 102 zusätzlich zu den Name-Adress-Zuordnungen Zuordnungen zwischen FQDN-Gerätenamen und Anlagenkennzeichen erfasst. Die Anlagenkennzeichen werden innerhalb derselben Baumstruktur wie die FQDN-Gerätenamen erfasst. Dabei umfassen den Anlagekennzeichen jeweils in der Baumstruktur zugeordnete Endknoten einen Verweis 123 auf den FQDN-Gerätenamen jeweils zugeordnete Endknoten (siehe auch Figur 3).

Sollen FQDN-Gerätenamen im Namensdienstsystem weiter strukturiert werden und beispielsweise Teilanlagen oder Anlageneinheiten repräsentieren, können Zwischenknoten für Anlagenkennzeichen einen Verweis auf Anlageneinheiten jeweils zugeordnete Zwischenknoten umfassen. Die Verweise auf den FQDN-Gerätenamen jeweils zugeordnete Endknoten oder auf Anlageneinheiten jeweils zugeordnete Zwischenknoten erfolgen im vorliegenden Ausführungsbeispiel mittels CNAME Resource Records entsprechend IETF RFC 1034 und 1035 oder DNAME Resource Records entsprechend IETF RFC 6672. Die Anlagenkennzeichen umfassen insbesondere codierte Gerätetypen, Gerätestandorte bzw. hierarchische Gerätezuordnungen innerhalb des industriellen Automatisierungssystems.

Eine Erfassung einer Name-Adress-Zuordnung und einer Zuordnung zwischen Gerätename und Anlagenkennzeichen wird durch das jeweilige Automatisierungs- bzw. Kommunikationsgerät veranlasst. Entsprechend Figur 2 fordert ein DNS-Update-Client 113 des Automatisierungsgeräts 101 mittels DNS-Update-Requests 114, 115 entsprechend IETF RFC 2136 die Erfassung des FQDN-Gerätenamens 111 bzw. des Anlagenkennzeichens 112 sowie seiner Kommunikationsnetzadresse durch den DNS-Server 102 an. Vor der Erfassung der Name-Adress-Zuordnung und der Zuordnung zwischen Gerätename und Anlagenkennzeichen wird im vorliegenden Ausführungsbeispiel noch eine Authentifizierung des jeweiligen Automatisierungs- bzw. Kommunikationsgeräts entsprechend IETF RFC 3007 durchgeführt.

Die Anlagenkennzeichen werden für eine Erfassung im DNS-Server 102 DNS-konform codiert, beispielsweise mittels ADNA-Algorithmus (Automation Domain Names for Applications). Alternativ dazu kann eine Codierung der Anlagenkennzeichen unter Zuhilfenahme einer DDDS DNS Datenbank entsprechend IETF RFC 3404 unter Kontrolle ebenfalls im DNS-Server 102 hinterlegter Codierungsregeln erfolgen, beispielsweise entsprechend IETF RFC 3405 in Verbindung mit IETF RFC 2483. Damit ist es möglich, die Codierung von Anlagenkennzeichen im Teilbaum 122 für die Anlagenkennzeichen entsprechend individuellen Anforderungen anzupassen, ohne dass hierzu Anpassungen am Registrierungsmodul 113 des jeweiligen Automatisierungsgeräts 101 erforderlich sind.

In Figur 1 ist außerdem eine Webcrawler-Funktionen umfassende Indizierungseinheit 104 dargestellt, die für den Teilbaum 122, der die Anlagenkennzeichen umfasst, einen Suchindex für eine Suche nach Anlagenkennzeichen bzw. Bestandteilen von Anlagenkennzeichen erzeugt. Dabei umfasst der Suchindex die in die Anlagenkennzeichen codierten Gerätetypen, Gerätestandorte bzw. hierarchischen Gerätezuordnungen innerhalb des industriellen Automatisierungssystems. Die Indizierungseinheit 104 ist mit einem Suchmodul 105 verbunden, das Codes für Gerätetypen, Gerätestandorte bzw. hierarchische Gerätezuordnungen innerhalb des industriellen Automatisierungssystems bereitstellt, die durch die Indizierungseinheit 104 im Suchindex abgebildet werden. Diese Codes für Gerätetypen, Gerätestandorte bzw. hierarchische Gerätezuordnungen können mittels des Suchmoduls 105 benutzer- bzw. anwendungsspezifisch definiert werden. Je nach Anforderungen kann ein Suchmodul 105 komplett durch ein anderes benutzer- bzw. anwendungsspezifisches Suchmodul 105 ersetzt werden.

Vom Namensdienst-Server 102 wird eine Kopie des die Anlagenkennzeichen umfassenden Teilbaums 122 als Zonendatei 127 an die Indizierungseinheit 104 übertragen. Dies kann beispielsweise mittels eines vollständigen asynchronen Zonentransfers entsprechend IETF RFC 5936, eines inkrementellen Zonentransfers entsprechend IETF RFC 1995, Benachrichtigungen über DNS-Zonenänderungen entsprechend IETF RFC 1996 oder mittels DNS-Push-Benachrichtigungen entsprechend IETF draft-ietf-dnssd-push erfolgen.

An einen Web-Server 116 des industriellen Automatisierungssystems gerichtete Gerätesuchanfragen 117, die Bestandteile von Anlagenkennzeichen umfassen, werden zur Ermittlung eines vollständigen Anlagenkennzeichens vom Web-Server 116 an das Suchmodul 105 weitergeleitet, das den Suchindex nutzt. Für Gerätesuchanfragen 117 stellt der Web-Server 116 ein HTML-Dokument 118 an eine Rechnereinheit 103 mit einer graphischen Benutzerschnittstelle 131 für eine Eingabe eines Bestandteils 132 eines zu suchenden Anlagenkennzeichens bereit. Das Suchmodul 105 nimmt derartige Bestandteile von Anlagenkennzeichen als Gerätesuchanfragen entgegen, führt anhand des Suchindex eine Suche nach möglichen vollständigen Anlagenkennzeichen durch, stellt eine Benutzerauswahl ermittelter möglicher Anlagenkennzeichen bereit und komplettiert auf Basis einer Benutzerauswahl das Anlagenkennzeichen. Das ermittelte vollständige Anlagenkennzeichen 119 wird anschließend über den Web-Server 116 an die Rechnereinheit 103 übermittelt, so dass auf Basis des ermittelten vollständigen Anlagenkennzeichens 119 eine Anfrage zur Auflösung eines Anlagenkennzeichens an das Namensdienstsystem übermittelt werden kann.

Entsprechend der in Figur 1 dargestellten Anlagenkennzeichen-Auflösung übermittelt die Rechnereinheit 103 für das ermittelte vollständige Anlagenkennzeichen 119 eine Meldung 134 mit einer Anfrage zur Ermittlung des Wurzelknotens des Teilbaums 122 für die Anlagenkennzeichen, an dem anzuwendende Codierungsregeln für die Anlagenkennzeichen hinterlegt sind. Der DNS-Server 102 beantwortet diese Meldung 134 mit einer Meldung 125, in der die anzuwendenden Codierungsregeln für die Anlagenkennzeichen angegeben sind. Ein durch die Rechnereinheit 103 implementiertes Codierungsmodul 133 codiert anschließend das ermittelte vollständige Anlagenkennzeichen 119 entsprechend den anzuwendenden Codierungsregeln. Die Rechnereinheit 103 übermittelt dann eine Meldung 135 mit einem HTTP GET Request für einen dynamisch generierten Uniform Resource Identifier (URI). Dabei umfasst der Uniform Resource Identifier den Wurzelknoten des anlagenindividuellen Teilbaums 122 für die Anlagenkennzeichen und das entsprechend den anzuwendenden Codierungsregeln codierte Anlagenkennzeichen.

Im DNS-Server 102 wird für diesen dynamisch generierten Uniform Resource Identifier eine Namensauflösung ausgeführt, wobei dem Verweis 123 vom codierten Anlagenkennzeichen 112 auf den FQDN-Gerätenamen 111 mit den gesuchten A/AAAA Resource Records gefolgt wird. Die Meldung 135 mit dem HTTP GET Request wird durch den DNS-Server 102 mit einer Meldung 126 beantwortet, welche die gesuchten A/AAAA Resource Records umfasst. Damit kann die Rechnereinheit 103 eine Meldung 136 an das Automatisierungsgerät 101 zum Abruf gewünschter Statusinformationen oder zur Übermittlung von Steuerungsbefehlen adressieren.

Die FQDN-Gerätenamen und die Anlagenkennzeichen von Automatisierungsgeräten einer Automatisierungsanlage werden im vorliegenden Ausführungsbeispiel innerhalb separater anlagenindividueller Teilbäume 121, 122 der Baumstruktur verwaltet. Dabei umfasst der Wurzelknoten des Teilbaums 121 für die FQDN-Gerätenamen entsprechend Figur 4 einen Verweis 124 auf den zugeordneten Wurzelknoten des Teilbaums 122 für die Anlagenkennzeichen. Dieser Verweis 124 auf den zugeordneten Wurzelknoten des Teilbaums 122 für die Anlagenkennzeichen erfolgt durch einen Text Resource Record im Wurzelknoten des Teilbaums 121 für die FQDN-Gerätenamen.

Bei einer durch einen DNS-Update-Client initiierten Erfassung eines Anlagenkennzeichens wird zunächst der zugeordnete Gerätename des jeweiligen Automatisierungs- bzw. Kommunikationsgeräts ermittelt. Anhand des ermittelten Gerätenamens wird der Wurzelknoten des anlagenindividuellen Teilbaums für die Gerätenamen ermittelt. Der zugeordnete Wurzelknoten des anlagenindividuellen Teilbaums für die Anlagenkennzeichen wird wiederum anhand des ermittelten Wurzelknotens des Teilbaums für die Gerätenamen ermittelt. Abschließend wird für das zu erfassende Anlagenkennzeichen ein Endknoten unterhalb des ermittelten Wurzelknotens des Teilbaums für die Anlagenkennzeichen erzeugt.

Der Wurzelknoten des Teilbaums 121 für die FQDN-Gerätenamen bildet einen Zonenkopf des Teilbaums 121 für die FQDN-Gerätenamen, während der Wurzelknoten des Teilbaums 122 für die Anlagenkennzeichen einen Zonenkopf des Teilbaums 122 für die Anlagenkennzeichen bildet. Die Zonenköpfe sind jeweils durch einen Start of Authority Resource Record gekennzeichnet. Mit dem Verweis 124 vom Wurzelknoten des Teilbaums 121 für die FQDN-Gerätenamen auf den Wurzelknoten des Teilbaums 122 für die Anlagenkennzeichen kann eine wiederholte manuelle und mitunter fehlerträchtige Konfiguration anlagenspezifischer Information entfallen, da diese Information nur an genau einer Stelle im anlagenindividuellen Teilbaum 121 für die FQDN-Gerätenamen hinterlegt werden muss. Separate Teilbäume 121, 122 für die FQDN-Gerätenamen und für die Anlagenkennzeichen ermöglichen einen flexiblen Betrieb von DNS-Servern, da FQDN-Gerätenamen und Anlagenkennzeichen in getrennten DNS-Zonen verwaltet werden und beispielsweise zur Lastverteilung über verschiedene DNS-Server bereitgestellt werden können. Trotzdem müssen IP-Adress-Einträge (A/AAAA-RR) nur an einer Stelle gepflegt werden, nämlich am üblichen Ort im Teilbaum 121 für die FQDN-Gerätenamen.

## Patentansprüche

1. Verfahren zur Bereitstellung eines erweiterten Namensdienstes für ein industrielles Automatisierungssystem, bei dem
- in einem zumindest einen Namensdienst-Server (102) umfassenden Namensdienstsystem Name-Adress-Zuordnungen zwischen Gerätenamen (111) und Kommunikationsnetzadressen (112) für Automatisierungs- und/oder Kommunikationsgeräte (101) erfasst werden, anhand derer auf eine Namensauflösungsanfrage eine zugeordnete Kommunikationsnetzadresse bereitgestellt wird, wobei im Namensdienstsystem erfasste Gerätenamen eine durch eine Baumstruktur repräsentierte hierarchische Gliederung aufweisen,
- im Namensdienstsystem (102) zusätzlich zu den Name-Adress-Zuordnungen Zuordnungen zwischen Gerätenamen (111) und Anlagenkennzeichen (112) für Automatisierungs- und/oder Kommunikationsgeräte (101) erfasst werden, wobei die Anlagenkennzeichen codierte Gerätetypen, Gerätestandorte und/oder hierarchische Gerätezuordnungen innerhalb des industriellen Automatisierungssystems umfassen und jeweils mit einem Verweis (123) auf einen zugeordneten Gerätenamen in einem separaten Teilbaum (122) innerhalb derselben Baumstruktur wie die Gerätenamen erfasst werden,
- eine Erfassung einer Name-Adress-Zuordnung und einer Zuordnung zwischen Gerätename (111) und Anlagenkennzeichen (112) durch das jeweilige Automatisierungs- und/oder Kommunikationsgerät (101) veranlasst wird,
- durch eine Indizierungseinheit (104) für den die Anlagenkennzeichen (112) umfassenden Teilbaum (122) ein Suchindex für eine Suche nach Anlagenkennzeichen und/oder Bestandteilen von Anlagenkennzeichen erzeugt wird, wobei der Suchindex in die Anlagenkennzeichen codierte Informationen umfasst,
- an einen Web-Server (116) des industriellen Automatisierungssystems gerichtete Gerätesuchanfragen (117), die Bestandteile von Anlagenkennzeichen umfassen, an ein den Suchindex nutzendes Suchmodul (105) zur Ermittlung zumindest eines vollständigen Anlagenkennzeichens (119) weitergeleitet werden,
- auf Basis eines ermittelten vollständigen Anlagenkennzeichens eine Anfrage zur Auflösung eines Anlagenkennzeichens an das Namensdienstsystem (102) übermittelt wird.

2. Verfahren nach Anspruch 1,
bei dem die Erfassung der Name-Adress-Zuordnung und der Zuordnung zwischen Gerätename (111) und Anlagenkennzeichen (112) mittels eines DNS-Update-Requests (114, 115) und/oder eines DNS-Update-Client (113) entsprechend IETF RFC 2136 durch das jeweilige Automatisierungs- und/oder Kommunikationsgerät (101) veranlasst wird.

3. Verfahren nach Anspruch 2,
bei dem vor der Erfassung der Name-Adress-Zuordnung und der Zuordnung zwischen Gerätename (111) und Anlagenkennzeichen (112) eine Authentifizierung des jeweiligen Automatisierungs- und/oder Kommunikationsgeräts (101) entsprechend IETF RFC 3007 durchgeführt wird.

4. Verfahren nach einem der Ansprüche 1 bis 3,
bei dem eine Kopie des die Anlagenkennzeichen umfassenden Teilbaums (122) mittels eines vollständigen asynchronen Zonentransfers entsprechend IETF RFC 5936, eines inkrementellen Zonentransfers entsprechend IETF RFC 1995, Benachrichtigungen über DNS-Zonenänderungen entsprechend IETF RFC 1996 und/oder mittels DNS-Push-Benachrichtigungen entsprechend IETF draft-ietf-dnssd-push vom Namensdienst-Server an die Indizierungseinheit (104) übertragen wird.

5. Verfahren nach einem der Ansprüche 1 bis 4,
bei dem Codes für Gerätetypen, Gerätestandorte und/oder hierarchische Gerätezuordnungen innerhalb des industriellen Automatisierungssystems durch das Suchmodul (105) an die Indizierungseinheit (104) bereitgestellt und durch die Indizierungseinheit im Suchindex abgebildet werden.

6. Verfahren nach einem der Ansprüche 1 bis 5,
bei dem der Suchindex die in die Anlagenkennzeichen (112) codierten Gerätetypen, Gerätestandorte und/oder hierarchischen Gerätezuordnungen innerhalb des industriellen Automatisierungssystems umfasst.

7. Verfahren nach einem der Ansprüche 1 bis 6,
bei dem die Indizierungseinheit (104) Webcrawler-Funktionen umfasst.

8. Verfahren nach einem der Ansprüche 1 bis 7,
bei dem das Suchmodul (105) Bestandteile von Anlagenkennzeichen als Gerätesuchanfragen (117) entgegennimmt, anhand des Suchindex eine Suche nach möglichen vollständigen Anlagenkennzeichen durchführt, eine Benutzerauswahl ermittelter möglicher Anlagenkennzeichen bereitstellt und auf Basis einer Benutzerauswahl das Anlagenkennzeichen komplettiert.

9. Verfahren nach einem der Ansprüche 1 bis 8,
bei dem bei einer Anfrage zur Auflösung eines Anlagenkennzeichens anhand der Zuordnungen zwischen Gerätenamen (111) und Anlagenkennzeichen (112) ein Gerätename ermittelt und für diesen eine Namensauflösungsanfrage zur Ermittlung einer zugeordneten Kommunikationsnetzadresse durchgeführt wird.

10. Verfahren nach einem der Ansprüche 1 bis 9,
bei dem die Baumstruktur einen Wurzelknoten, innere Knoten und Endknoten umfasst, bei dem den Anlagekennzeichen (112) in der Baumstruktur jeweils Endknoten zugeordnet werden und bei dem die den Anlagekennzeichen jeweils zugeordneten Endknoten einen Verweis (123) auf den Gerätenamen (111) jeweils zugeordnete Endknoten oder Zwischenknoten für Anlagekennzeichen einen Verweis auf Anlageneinheiten jeweils zugeordnete Zwischenknoten umfassen.

11. Verfahren nach Anspruch 10,
bei dem die Gerätenamen (111) und die Anlagenkennzeichen (112) von Automatisierungs- und/oder Kommunikationsgeräten (101) einer Automatisierungsanlage innerhalb separater anlagenindividueller Teilbäume (121, 122) der Baumstruktur verwaltet werden und der Wurzelknoten des Teilbaums (121) für die Gerätenamen einen Verweis auf den zugeordneten Wurzelknoten des Teilbaums (122) für die Anlagenkennzeichen umfasst.

12. Verfahren nach Anspruch 11,
bei dem bei einer Erfassung eines Anlagenkennzeichens (112) der zugeordnete Gerätename (111) ermittelt wird, bei dem anhand des ermittelten Gerätenamens der Wurzelknoten des Teilbaums (121) für die Gerätenamen ermittelt wird, bei dem anhand des ermittelten Wurzelknotens des Teilbaums für die Gerätenamen der zugeordnete Wurzelknoten des Teilbaums (1229 für die Anlagenkennzeichen ermittelt wird und bei dem für das zu erfassende Anlagenkennzeichen ein Endknoten unterhalb des ermittelten Wurzelknotens des Teilbaums für die Anlagenkennzeichen erzeugt wird.

13. Verfahren nach einem der Ansprüche 11 oder 12,
bei dem der Verweis (123) auf den zugeordneten Wurzelknoten des Teilbaums (122) für die Anlagenkennzeichen durch einen Text Resource Record im Wurzelknoten des Teilbaums für die Gerätenamen erfolgt.

14. Verfahren nach einem der Ansprüche 11 bis 13,
bei dem der Wurzelknoten des Teilbaums (121) für die Gerätenamen einen Zonenkopf des Teilbaums für die Gerätenamen bildet, bei dem der Wurzelknoten des Teilbaums (122) für die Anlagenkennzeichen einen Zonenkopf des Teilbaums für die Anlagenkennzeichen bildet und bei dem die Zonenköpfe jeweils durch einen Start of Authority Resource Record gekennzeichnet sind.

15. Verfahren nach einem der Ansprüche 10 bis 14,
bei dem die Verweise (123) auf den Gerätenamen jeweils zugeordnete Endknoten oder auf Anlageneinheiten jeweils zugeordnete Zwischenknoten mittels CNAME Resource Records oder DNAME Resource Records erfolgen.

16. Verfahren nach einem der Ansprüche 1 bis 15,
bei dem die Anlagenkennzeichen (122) auf Basis einer vorgegebenen Codierungsregel entsprechend Automation Domain Name Algorithmus oder entsprechend IETF RFC 3405 in Verbindung mit IETF RFC 2483 codiert und entsprechend der vorgegebenen Codierungsregel codiert durch den Namensdienst-Server (102) gespeichert werden.
